# EUROPÄISCHE PATENTSCHRIFT

(11) **EP 3 115 126 B1**
(45) Veröffentlichungstag und Bekanntmachung des Hinweises auf die Patenterteilung: **20.11.2019**
(21) Anmeldenummer: 16175462.7
(22) Anmeldetag: 21.06.2016
(51) Int. Cl.: B21J 15/02, B21J 15/10, B21J 15/18, B21J 15/20, B21J 15/26, B21D 39/03, B23P 19/06

(54) **BEARBEITUNGSZANGE**
PROCESSING TONG
PINCE DE TRAITEMENT

(30) Priorität: 10.07.2015 DE 102015111227
(43) Veröffentlichungstag der Anmeldung: 11.01.2017
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- EP-A2- 0 124 323
- WO-A1-2015/110302
- DE-A1- 10 319 411
- DE-A1- 19 905 527
- DE-A1-102011 116 654
- US-A1- 2005 132 563
- US-A1- 2009 301 164

## Beschreibung

Die Erfindung betrifft eine Bearbeitungszange gemäß dem Oberbegriff des Patentanspruches 1.

Bearbeitungszangen und Bearbeitungsstationen zum Einbringen von Funktionselementen wie beispielsweise Muttern, Bolzen und dergleichen Verbindungselemente in Werkstücke aus Blech oder Stahlblech, und zwar durch Fügen und anschließendes Verpressen sind hinsichtlich ihres Aufbaus und ihrer Funktionsweise bekannt.

Insbesondere ist aus der DE 103 59 879 B4 eine hydraulische Bearbeitungszange zum Einbringen von Funktionselementen wie beispielsweise Muttern, Bolzen usw. in Werkstücke aus Blech oder Stahlblech bekannt, die einen Zangenkörper mit einem ersten und zweiten Zangenarm aufweist, welche jeweils einen Teil eines beispielsweise zweiteiliges Werkzeuges aufnehmen. Die beiden an den einander gegenüber liegenden Zangenarmen montierten Werkzeugteile schließen hierbei einen Arbeitsbereich, insbesondere Arbeitspalt ein, indem das zu ver- oder bearbeitende Werkstück und ein Funktionselement aufgenommen sind. Um ein Fügen und Verpressen des Funktionselementes mit dem Werkstück zu ermöglichen, ist zumindest eines der beiden Werkzeugteile axial beweglich ausgebildet, und zwar in Richtung des gegenüberliegenden anderen Werkzeugteils. Speziell für das Verpressen weist das axial beweglich ausgebildete Werkzeugteil einen Werkzeugstößel bzw. einen so genannten Plunger auf. Der Werkzeugstößel ist zum Schließen der Bearbeitungszange ausgehend von einer Ausgangsposition in eine Arbeitsposition axial bewegbar, wodurch der Arbeitsspalt derart reduzierbar ist, dass sich der Werkzeugstößel an dem in das Werkstück einzusetzenden Funktionselement und sich dieses am Werkstück abstützen. Die von einem hydraulischen Druckzylinder der hydraulischen Betätigungseinrichtung erzeugte Presskraft wird direkt auf den Werkzeugstößel übertragen und hierdurch das Funktionselement durch Verpressen im Werkstück fixiert, und zwar vorzugsweise durch bleibende Materialverformung beispielsweise des Funktionselementes und/oder des Werkstückes. Bei der bekannten Bearbeitungs- bzw. Setzzange wird die Zustellbewegung des Werkzeugstößels bzw. Plungers an das Werkstück mit einem großem Zustellhub, jedoch mit reduzierter Kraft ausgeführt, und zwar mit einer hierzu vorgesehenen Zustelleinrichtung, während bei bereits geschlossener Bearbeitungszange, d.h. in Arbeitsposition das eigentliche Bearbeiten bzw. Verpressen durch die hydraulischen Betätigungseinrichtung mit äußerst geringem Hub, jedoch mit hoher Kraft erfolgt. Um dies zu erreichen ist die Bearbeitungszange so ausgebildet, dass der Druckkolben des Druckzylinders der hydraulischen Betätigungseinrichtung achsgleich mit dem Werkzeugstößel angeordnet ist, allerdings derart, dass der zugestellte Werkzeugstößel von dem Druckkolben des Druckzylinders axial beabstandet ist. Über ein radial zur Achse des Werkzeugstößels verschiebbares Kopplungsmittel, insbesondere ein Druckstück wird der in Arbeitsposition bestehende Abstand zwischen dem Druckkolben des Druckzylinders und dem zugestellten Werkzeugstößel überbrückt, sodass der Druckkolben beim Verpressen über dieses Druckstück auf den Werkzeugstößel einwirkt und die erzeugte hohe Bearbeitungskraft direkt auf den Werkzeugstößel überträgt. Bei in die Ausgangsstellung zurückbewegten Werkzeugstößel bzw. bei geöffneter Bearbeitungszange befindet sich das Druckstück seitlich vom Werkzeugstößel und gibt damit den für das Rückbewegen des Werkzeugstößels in seine Ausgangsposition notwendigen Raum wieder frei.

Ferner offenbart die US 2005/132563 A1, welche die Basis für den Oberbegriff des Anspruchs 1 bildet, eine hydraulische Bearbeitungszange, bei der für die Betätigungseinrichtung und für die Zustelleinrichtung separate Antriebseinheiten vorgesehen sind, wobei die Zustelleinrichtung pneumatisch angetrieben ist. Eine ähnliche hydraulische Bearbeitungszange mit eigenen Antriebseinheiten für die Betätigungseinrichtung und für die Zustelleinrichtung ist in der US 2009/0301164 A1 beschrieben, wobei die Antriebseinheit der Zustelleinrichtung als elektrische Antriebseinheit ausgebildet sein kann.

Nachteilig weisen die bekannten hydraulischen Bearbeitungszangen aufgrund des hydraulischen Druckzylinders einen hohen Wartungsaufwand auf und die damit erzeugte Betätigungskraft und/oder Betätigungsbewegung ist nur bedingt genau steuer- und regelbar. Auch weisen derartige hydraulischen Bearbeitungszangen aufgrund des entlang der Bewegungsachse an den Werkzeugstößel anschließenden hydraulischen Druckzylinders eine hohe Bauform auf, die in einigen Anwendungen mit beengten Raumverhältnissen zu Kollisionen mit anderen Bauteilen führen kann.

Aus der DE 10 2011 116654 A1 ist weiterhin eine Vorrichtung zum Stanznieten bekannt, bei der die Zustellung und die Betätigung von derselben Einrichtung übernommen werden und die Zustellung und die Betätigung daher auch über eine gemeinsame Antriebseinheit angetrieben werden, welche beispielsweise ein Elektromotor sein kann. Auch die nachveröffentlichte WO 2015/110302 A1, die somit Stand der Technik nach Artikel 54(3) EPÜ darstellt, offenbart eine Bearbeitungszange, bei der die Zustelleinrichtung und die Betätigungseinrichtung eine gemeinsame Antriebseinheit nutzen, welche beispielsweise als elektrische Antriebseinheit ausgebildet sein kann.

Ausgehend hiervon liegt der Erfindung die Aufgabe zugrunde, eine verbesserte Bearbeitungszange anzugeben, die unter Beibehaltung des grundsätzlichen Vorteils einer geringen Bauhöhe eine individuell einstellbare Bearbeitungskraft aufweist. Die Aufgabe wird durch eine Bearbeitungszange gemäß dem Patentanspruch 1 gelöst.

Im Sinn der Erfindung wird insbesondere unter "Bearbeitungszange" eine Vorrichtung verstanden, mittels der mit hoher Krafteinwirkung Werkstücke bearbeitet bzw. verarbeitet werden können und die hierzu wenigstens zwei relativ zueinander bewegbare, einen Arbeitsspalt ausbildenden Werkzeugteile aufweisen, von denen zumindest ein Werkzeugteil mechanisch betätigbar ist und von denen ein weiteres Werkzeugteil eine Werkstückanlage oder ein weiteres Werkstückelement bildet. Auch kann die Bearbeitungszange Teil einer Bearbeitungsstation oder Bearbeitungsvorrichtung sein.

Der wesentliche Aspekt der erfindungsgemäßen Bearbeitungszange ist darin zu sehen, dass die Betätigungseinrichtung eine elektrische Antriebseinheit zur Erzeugung der Bearbeitungskraft und direkten Übertragung der erzeugten Bearbeitungskraft auf das erste Werkzeugteil aufweist oder dass die Betätigungseinrichtung eine elektrische Antriebseinheit zur Erzeugung einer Hilfsbearbeitungskraft und eine mit dem ersten Werkzeugteil antriebsmäßig verbindbare Kraftübersetzungsmechanik aufweist, die zur Übersetzung der Hilfsbearbeitungskraft in die Bearbeitungskraft und direkte Übertragung dieser auf das erste Werkezugteil ausgebildet ist. Ferner weist die Zustelleinrichtung eine weitere elektrische Antriebseinheit auf, mittels der eine Zustellbewegung des ersten Werkzeugteils erzeugt wird. Hierbei ist die Zustelleinrichtung zur Erzeugung einer Zustellbewegung des ersten Werkzeugteils mit großem Zustellhub, jedoch lediglich geringer Zustellkraft eingerichtet. Besonders vorteilhaft ist durch die erfindungsgemäße Verwendung einer elektrischen Antriebseinheit, insbesondere einer Servomotoreinheit eine deutlich genauere Regelung der Bearbeitungsbewegung, insbesondere des Arbeitshubes und der Bearbeitungskraft möglich. Weiterhin vorteilhaft wird dadurch bei stirnseitiger Anordnung der Servomotoreinheit eine geringe Bauhöhe der Bearbeitungszange erreicht. Alternativ kann die Betätigungseinrichtung seitlich an der Bearbeitungszange, insbesondere im Bereich des Jochabschnittes des Zangenkörpers angeordnet sein und über ein Kraftübersetzungsmechanik mit dem ersten Werkzeugteil antriebsmäßig verbunden sein. Dies ermöglicht bei geringer Bauhöhe die Erzeugung einer um bis zu 50% reduzierten Hilfsbearbeitungskraft, um aufgrund der Umlenkung und der Verstärkung dieser mittels der Kraftübersetzungsmechanik einer bekannten Betätigungsvorrichtung vergleichbaren Bearbeitungskraft zu erzeugen. Damit können Antriebseinheiten mit einer geringeren Leistung Verwendung finden, welche kostengünstiger sind und einen geringeren Energieverbrauch aufweisen.

Weiterhin vorteilhaft ist in der Arbeitsposition die eine elektrische Antriebseinheit aufweisende Betätigungseinrichtung über ein radial zur Werkzeugachse verschiebbares Kraftübertragungselement mit dem ersten Werkzeugteil verbindbar, und zwar durch Einbringen des Kraftübertragungselementes in einen sich entlang der Werkzeugachse erstreckenden Freiraum zwischen die Betätigungseinrichtung und das erste Werkzeugteil.

In einer alternativen Ausführungsvariante kann die Betätigungseinrichtung mit dem ersten Werkzeugteil entlang der Werkzeugachse mitbewegbar und in Arbeitsposition am ersten Zangenarm festlegbar ausgebildet sein. Hierdurch entfällt das Vorsehen eines Kraftübertragungselementes.

In einer vorteilhaften Ausführungsvariante ist die von der Betätigungseinrichtung erzeugte Hilfsbearbeitungskraft radial zur Werkzeugachse oder entgegengesetzt zur Bearbeitungskraft orientiert, wobei die Kraftübersetzungsmechanik zur Übersetzung der von der Betätigungseinrichtung bereitgestellten Hilfsbearbeitungskraft in eine entlang der Werkzeugachse orientierte und in Richtung des ersten Werkzeugteils wirkende Bearbeitungskraft ausgebildet ist. In einer bevorzugten Ausführungsvariante ist die Kraftübersetzungsmechanik auch zur Verstärkung der von der Betätigungseinrichtung bereitgestellten Hilfsbearbeitungskraft ausgebildet.

Die Kraftübersetzungsmechanik kann unterschiedliche Ausführungsformen aufweisen, insbesondere kann diese eine Hebelmechanik, eine Kniehebelmechanik oder eine Keilmechanik aufweisen.

Vorteilhaft sind der erste und zweite Zangenarm über einen Zangenjochabschnitt miteinander verbunden, wobei die eine elektrische Antriebseinheit aufweisende Betätigungseinrichtung im Bereich des Zangenjochabschnittes seitlich am Zangenkörper und die zugehörige Kraftübersetzungsmechanik im Bereich des ersten Zangenarmes angeordnet sind.

Das erste Werkzeugteil ist bevorzugt als Werkzeugstössel oder Plungers ausgebildet.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht einer Bearbeitungszange mit einer ersten Ausführungsvariante einer erfindungsgemäßen Betätigungseinrichtung,
- Fig. 2: eine schematische Seitenansicht einer Bearbeitungszange mit einer zweiten Ausführungsvariante einer erfindungsgemäßen Betätigungseinrichtung,
- Fig. 3a-c: schematische Funktionsdiagramme betreffend unterschiedliche Ausführungsvarianten einer Kraftübersetzungsmechanik.

Der prinzipielle Aufbau und die Funktionsweise einer Bearbeitungszange gemäß der Erfindung sind beispielsweise aus der DE 103 59 879 B4 oder der EP 1 984 132 B1 bekannt.

Eine derartige Bearbeitungs- oder Setzzange wird nachfolgend mit dem Bezugszeichen 1 versehen. Unterschiedlich zum Stand der Technik weist jedoch die erfindungsgemäße Bearbeitungszange 1 keine direkte hydraulische Betätigungseinrichtung auf.

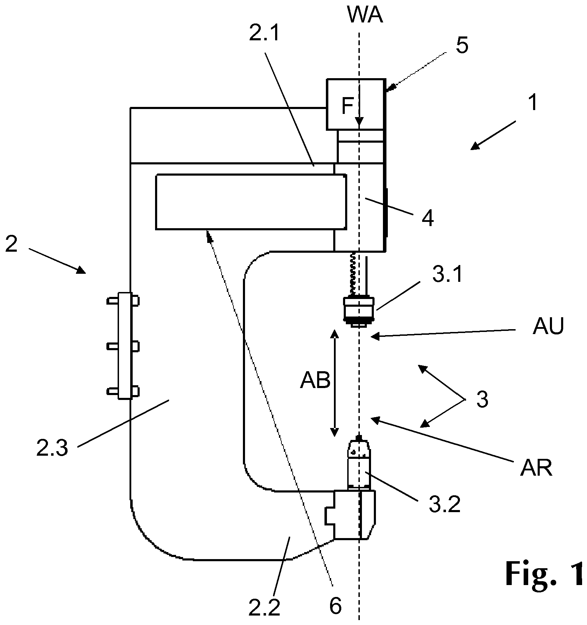

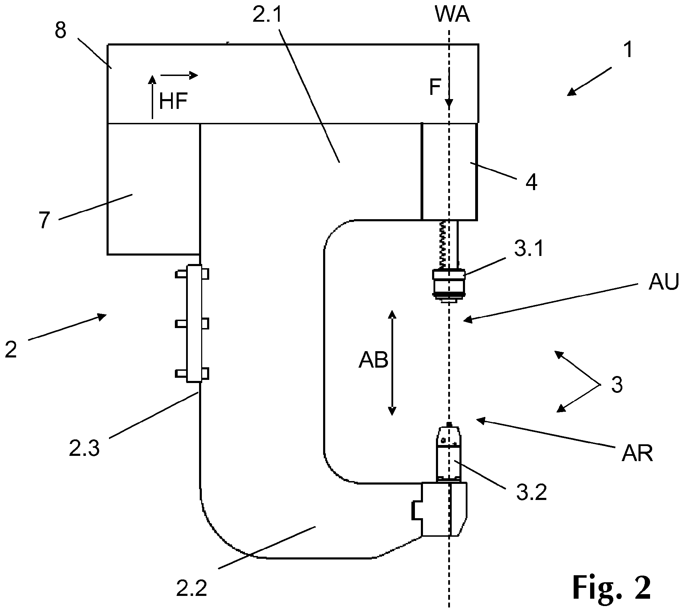

Die beispielhaft und lediglich schematisch in der Figur 1 und 2 dargestellte Bearbeitungs- oder Setzzange 1 dient zum Einbringen von Funktions- oder Verbindungselementen, beispielsweise von Muttern, Bolzen oder dergleichen durch Fügen und/oder Verpressen in aus Blech gefertigte Werkstücke und/oder zum Verbinden von aus Blech gefertigten Werkstücken durch Durchsetzfügen.

Hierzu weist die Bearbeitungszange 1 zumindest einen vorzugsweise C- oder U-förmigen Zangenkörper 2 mit einem ersten und zweiten Zangenarm 2.1, 2.2 auf, die über einen Zangenjochabschnitt 2.3 miteinander verbunden sind. Der Zangenkörper 2 ist vorzugsweise einstückig oder einteilig ausgebildet.

Die Bearbeitungszange 1 kann auch Teil einer nicht in den Figuren dargestellten Arbeitsstation sein, wobei die Bearbeitungszange 1 darin beispielsweise den Handarbeitsplatz bildet. Der Zangenkörper 2 kann hierzu beispielsweise mit seinem Zangenjochabschnitt 2.3 an einem nicht in den Figuren dargestellten Maschinengestell oder einem nicht dargestellten Halter befestigt sein. Entsprechende Halte- und Verbindungsmittel sind in den Figuren 1 und 2 am Zangenjochabschnitt 2.3 beispielhaft angedeutet.

Ferner weist die Bearbeitungszange 1 ein mehrteiliges Werkzeug 3 auf, dass zumindest ein erstes Werkzeugteil 3.1 und ein zweites Werkzeugteil 3.2 umfasst, wobei die wenigstens zwei Werkzeugteile 3.1, 3.2 relativ zueinander bewegbar ausgebildet sind und einen Arbeitsbereich, vorzugsweise einen Arbeitsspalt AB einschließen.

Das erste Werkzeugteil 3.1 ist zum Schließen des Arbeitsbereiches AB entlang einer vertikalen Werkzeugachse WA verfahrbar am ersten Zangenarm 2.1 und das zweite Werkzeugteil 3.2 zur Bildung einer Werkstückanlage für zumindest ein Werkstück am zweiten Zangenarm 2.2 angeordnet, wobei das erste Werkzeugteil 3.1 mittels einer Zustelleinrichtung 4 und einer von dieser erzeugten Zustellbewegung von einer Ausgangsposition AU in eine Arbeitsposition AR und vice versa zustellbar. Die Zustelleinrichtung 4 ist als elektrische Zustelleinrichtung ausgebildet, welche einen Zustellhub erzeugt, der im Wesentlichen dem Weg von der Ausgangsposition AU zur Arbeitsposition AP entlang der Werkzeugachse WA entspricht.

In der Arbeitsposition AR liegt das erste Werkzeugteil 3.1 oder ein am ersten Werkzeugteil 3.1 gehaltenes Funktionselement gegen ein an der Werkstückanlage bzw. dem zweiten Werkzeugteil 3.2 sich abstützendes Werkstück an oder weist lediglich einen geringen Abstand hierzu auf. Das erste Werkzeugteil 3.1 ist beispielsweise als stanzkopfartiges Verpresswerkzeug ausgebildet, welches in den Figuren 1 und 2 lediglich schematisch dargestellt ist. Ein derartiges stanzkopfartiges Verpresswerkzeug kann beispielsweise in Form eines Werkzeugstößels oder eines so genannten Plungers ausgebildet sein, der in einem an dem ersten Zangenarm 2.1 befestigtes Gehäuse für einen axialen Zustellungshub entlang der Werkzeugachse WA verschiebbar geführt ist. Als zweites Werkzeugteil 3.2 ist beispielsweise ein matrizenartiges Werkzeugteil vorgesehen. Durch das Zusammenwirken der beiden Werkzeugteile 3.1, 3.2 wird das Fügen und Verpressen der jeweiligen Komponente(n) im Werkstück bewirkt.

Die Zustelleinrichtung 4 bewirkt eine Zustellbewegung des ersten Werkzeugteils 3.1 mit großem Zustellhub, jedoch lediglich geringer Zustellkraft. Die Zustellkraft ist hierbei hinsichtlich des Betrages derart bemessen, dass das die Ausführung einer Zustellbewegung mit entsprechenden Zustellhub des ersten Werkzeugteils 3.1 mit daran aufgenommenen Funktionselement gewährleistet ist, d.h. dass diese mindestens dem Massengewicht des ersten Werkzeugteils 3.1 und des Funktionselementes entspricht. Zur Übertragung der von der Zustelleinrichtung 4 erzeugten Zustellbewegung kann das erste Werkzeugteil 3.1 beispielsweise eine Verzahnung aufweisen, in welche ein Ritzel der Zustelleinrichtung 4 eingreift. Die Zustelleinrichtung 4 ist hierzu am ersten Zangenarm 2.1 befestigt.

Zum Verpressen des Funktionselementes ist jedoch eine an die Zustellbewegung mit großen Zustellhub anschließende Bearbeitungsbewegung des ersten Werkzeugteils 3.1 mit geringen Arbeitshub, aber mit hoher Bearbeitungskraft erforderlich, welche durch eine Betätigungseinrichtung 5, 7 zur Beaufschlagung des ersten Werkzeugteils 3.1 nach dem Zustellen mittels der Zustelleinrichtung 4 in die Arbeitsposition AR mit einer entlang der Werkzeugachse WA wirkenden hohen Bearbeitungskraft F erzeugt wird. Der Zustellhub überschreitet damit den Arbeitshub um ein Mehrfaches.

Erfindungsgemäß ist die Betätigungseinrichtung 5 durch eine elektrische Antriebseinheit zur Erzeugung der Bearbeitungskraft F und direkten Übertragung der erzeugten Bearbeitungskraft F auf das erste Werkzeugteil 3.1 ausgebildet. Die Betätigungseinrichtung 5, 6 ist direkt antriebsmäßig mit dem ersten Werkzeugteil 3.1 verbunden, ggf. auch mittels eines zusätzlichen Kraftübertragungselementes 6. Die Betätigungsrichtung 5 schließt sich entlang der Werkzeugachse WA an das erste Werkzeugteil 3.1 an und ist am ersten Zangenarm 2.1 befestigt. Durch die Betätigungseinrichtung 5 wird eine entlang der Werkzeugachse WA orientierte Bearbeitungsbewegung mit einem geringen Arbeitshub jedoch mit hoher Bearbeitungskraft F erzeugt.

Beispielsweise kann die Betätigungseinrichtung 5 mit dem ersten Werkzeugteil 3.1 mitbewegt werden und nach erfolgter Zustellbewegung am ersten Zangenarm 2.1 verriegelt werden, um dann ohne ein Kraftübertragungselement 6 mit dem ersten Werkzeugteil 3.1 zusammenzuwirken.

Auch kann die Betätigungseinrichtung 5 fest mit dem Zangenarm 2.1 befestigt sein und die durch die Zustellbewegung bzw. den Zustellhub erzeugte Distanz zwischen der Betätigungseinrichtung 5 und dem ersten Werkzeugteil 3.1 mittels eines vorzugsweise passiven Kraftübertragungselementes 6 überbrückt werden, welches jeweils zur direkten Anlage an den genannten Elementen kommt. Hierzu ist das Kraftübertragungselement 6 radial zur Werkzeugachse WA verschiebbar ausgebildet, welches zwischen dem in Arbeitsposition AR befindlichen ersten Werkzeugteil 3.1 und der Betätigungseinrichtung 5 eingebracht wird, um eine direkte Übertragung des Bearbeitungshubes mit der zugehörigen Bearbeitungskraft auf das erste Werkzeugteil 3.1 zu gewährleisten.

Alternativ ist die Betätigungseinrichtung 7 als eine elektrische Antriebseinheit zur Erzeugung einer Hilfsbearbeitungskraft HF und eine mit dem ersten Werkzeugteil 3.1 antriebsmäßig verbindbare Kraftübersetzungsmechanik 8 ausgebildet, die zur Übersetzung der Hilfsbearbeitungskraft HF in die Bearbeitungskraft F und Übertragung dieser auf das erste Werkzeugteil 3.1 eingerichtet ist. Die von der Betätigungseinrichtung 7 erzeugte Hilfsbearbeitungskraft HF ist entweder parallel zur Werkzeugachse WA oder senkrecht, vorzugsweise radial zur Werkzeugachse WA orientiert und wird mittels der Kraftübersetzungsmechanik 8 in die erforderlichen Bearbeitungsbewegung, welche entlang der Werkzeugachse WA in Richtung des ersten Werkzeugteils 3.1 wirkt, umgesetzt und ggf. verstärkt.

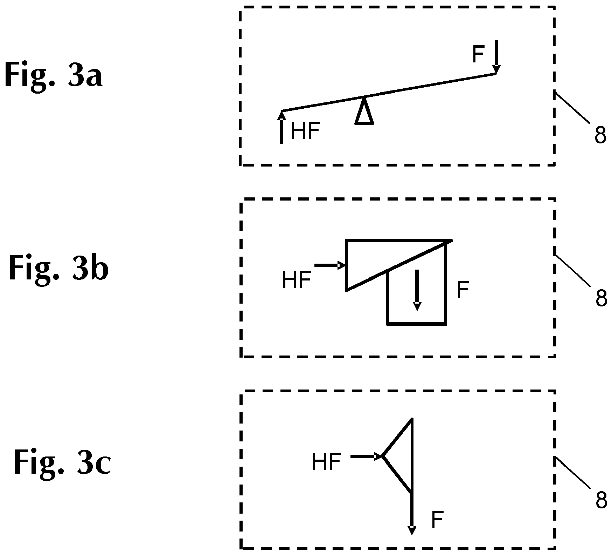

Hierzu kann die Kraftübersetzungsmechanik 8 unterschiedliche Funktionsweisen aufweisen, die beispielhaft in den Figuren 3a bis 3c dargestellt sind.

In der Ausführungsvariante gemäß Figur 3a weist die Kraftübersetzungsmechanik 8 eine Hebelmechanik auf, welche dazu ausgebildet ist, die von der Betätigungseinrichtung 7 erzeugte Hilfsbearbeitungskraft HF zu verstärken, wobei die von der Kraftübersetzungsmechanik 8 aus der Hilfsbearbeitungskraft HF erzeugte Bearbeitungskraft F entgegengesetzt zu dieser orientiert ist.

In einer weiteren Ausführungsvariante gemäß Figur 3b ist die Kraftübersetzungsmechanik 8 als Keilmechanik ausgebildet, die zur Erzeugung einer Kraftübertragung mittels Keilwirkung ausgebildet ist. Hierzu weist die Keilmechanik zumindest zwei Mechanikteile auf, die über eine in einer schiefen Ebene verlaufende Anlagefläche aneinander anliegen, wobei die schiefe Ebene schräg zur Werkzeugachse WA verläuft. Hierdurch wird die radial zur Werkzeugachse WA wirkende Hilfsbearbeitungskraft HF in die entlang der Werkzeugachse WA in Richtung des ersten Werkzeugteils 3.1 bzw. Bearbeitungsrichtung wirkende Bearbeitungskraft F umgesetzt. Auch kann bei entsprechender Ausbildung der Keilmechanik einer Verstärkung der Hilfsbearbeitungskraft HF erfolgen.

Schließlich weist die Kraftübersetzungsmechanik 8 in der Ausführungsvariante gemäß Figur 3c eine Kniehebelmechanik auf, mittels der ebenfalls die radial zur Werkzeugachse WA wirkende Hilfsbearbeitungskraft HF in die entlang der Werkzeugachse WA in Richtung des ersten Werkzeugteils 3.1 bzw. Bearbeitungsrichtung wirkende Bearbeitungskraft F umgesetzt wird.

Alternativ kann auch noch eine alternative geeignete Kraftübersetzungsmechaniken 8 vorgesehen sein, welche eine entsprechende Übersetzung der Hilfsbearbeitungskraft HF in die Bearbeitungskraft F und Übertragung dieser auf das erste Werkzeugteil 3.1 eingerichtet ist und ggf. zusätzlich eine kraftverstärkende Wirkung erzeugt.

### Bezugszeichenliste

- 1: Bearbeitungszange
- 2: Zangenkörper
- 2.1: erster Zangenarm
- 2.2: zweiter Zangenarm
- 2.3: Zangenjochabschnitt
- 3: Werkzeug
- 3.1: erster Werkzeugteil
- 3.2: zweiter Werkezugteil
- 4: Zustelleinrichtung
- 5: Betätigungseinrichtung
- 6: Kraftübertragungselement
- 7: Betätigungseinrichtung
- 8: Kraftübersetzungsmechanik

- AB: Arbeitsbereich
- AR: Arbeitsposition
- AU: Ausgangsposition
- F: Bearbeitungskraft
- HF: Hilfsbearbeitungskraft
- WA: Werkzeugachse

## Patentansprüche

1. Bearbeitungszange zum Be- und/oder Verarbeiten von Werkstücken mit hohen Bearbeitungskräften (F) umfassend einen Zangenkörper (2) mit einem ersten und zweiten Zangenarm (2.1, 2.2) und zumindest ein Werkzeug (3) mit wenigstens zwei relativ zueinander bewegbaren, einen Arbeitsbereich (AR) ausbildenden Werkzeugteilen (3.1, 3.2), bei der zumindest das erste Werkzeugteil (3.1) zum Schließen des Arbeitsbereiches (AR) entlang einer vertikalen Werkzeugachse (WA) verfahrbar am ersten Zangenarm (2.1) und das zweite Werkzeugteil (3.2) zur Bildung einer Werkstückanlage für zumindest ein Werkstück am zweiten Zangenarm (2.2) angeordnet ist, bei der das erste Werkzeugteil (3.1) mittels einer Zustelleinrichtung (4) von einer Ausgangsposition (AU) in eine Arbeitsposition (AR) zustellbar ist, wobei in der Arbeitsposition (AR) das erste Werkzeugteil (3.1) oder ein am ersten Werkzeugteil (3.1) gehaltenes Funktionselement gegen ein am zweiten Werkzeugteil (3.2) sich abstützendes Werkstück anliegt oder lediglich einen geringen Abstand hierzu aufweist, bei der eine Betätigungseinrichtung (5, 7) zur Beaufschlagung des ersten Werkzeugteils (3.1) nach dem Zustellen mittels der Zustelleinrichtung (4) in die Arbeitsposition (AR) mit einer entlang der Werkzeugachse (WA) wirkenden hohen Bearbeitungskraft (F) vorgesehen ist, wobei die Betätigungseinrichtung (5) eine elektrische Antriebseinheit zur Erzeugung der Bearbeitungskraft (F) und direkten Übertragung der erzeugten Bearbeitungskraft (F) auf das erste Werkzeugteil (3.1) aufweist oder die Betätigungseinrichtung (7) eine elektrische Antriebseinheit zur Erzeugung einer Hilfsbearbeitungskraft (HF) und eine mit dem ersten Werkzeugteil (3.1) antriebsmäßig verbindbare Kraftübersetzungsmechanik (8) aufweist, die zur Übersetzung der Hilfsbearbeitungskraft (HF) in die Bearbeitungskraft (F) und direkten Übertragung dieser auf das erste Werkzeugteil (3.1) ausgebildet ist, **dadurch gekennzeichnet, dass** die Zustelleinrichtung (4) eine weitere elektrische Antriebseinheit zur Erzeugung der Zustellbewegung des ersten Werkzeugteils (3.1) aufweist.

2. Bearbeitungszange nach Anspruch 1, **dadurch gekennzeichnet, dass** in der Arbeitsposition (AR) die eine elektrische Antriebseinheit aufweisende Betätigungseinrichtung (5) über ein radial zur Werkzeugachse (WA) verschiebbares Kraftübertragungselement (6) mit dem ersten Werkzeugteil (3.1) verbindbar ist, und zwar durch Einbringen des Kraftübertragungselementes (6) in einen sich entlang der Werkzeugachse (WA) erstreckenden Freiraum zwischen die Betätigungseinrichtung (5) und das erste Werkzeugteil (3.1).

3. Bearbeitungszange nach Anspruch 1, **dadurch gekennzeichnet, dass** die Betätigungseinrichtung (5) mit dem ersten Werkzeugteil (3.1) entlang der Werkzeugachse (WA) mitbewegbar und in Arbeitsposition (AR) am ersten Zangenarm (2.1) festlegbar ausgebildet ist.

4. Bearbeitungszange nach Anspruch 1, **dadurch gekennzeichnet, dass** die von der Betätigungseinrichtung (7) erzeugte Hilfsbearbeitungskraft (HF) radial zur Werkzeugachse (WA) oder entgegengesetzt zur Bearbeitungskraft (F) orientiert ist.

5. Bearbeitungszange nach Anspruch 4, **dadurch gekennzeichnet, dass** die Kraftübersetzungsmechanik (8) zur Übersetzung der von der Betätigungseinrichtung (7) bereitgestellten Hilfsbearbeitungskraft (HF) in eine entlang der Werkzeugachse (WA) orientierte und in Richtung des ersten Werkzeugteils (3.1) wirkende Bearbeitungskraft (F) ausgebildet ist.

6. Bearbeitungszange nach Anspruch 4 oder 5, **dadurch gekennzeichnet, dass** die Kraftübersetzungsmechanik (8) zur Verstärkung der von der Betätigungseinrichtung (7) bereitgestellten Hilfsbearbeitungskraft (HF) ausgebildet ist.

7. Bearbeitungszange nach Anspruch 5 oder 6, **dadurch gekennzeichnet, dass** die Kraftübersetzungsmechanik (8) eine Hebelmechanik aufweist.

8. Bearbeitungszange nach Anspruch 5 oder 6, **dadurch gekennzeichnet, dass** die Kraftübersetzungsmechanik (8) eine Kniehebelmechanik aufweist.

9. Bearbeitungszange nach Anspruch 5 oder 6, **dadurch gekennzeichnet, dass** die Kraftübersetzungsmechanik (8) eine Keilmechanik aufweist.

10. Bearbeitungszange nach einem der vorhergehenden Ansprüche, **dadurch gekennzeichnet, dass** der erste und zweite Zangenarm (2.1, 2.2) über einen Zangenjochabschnitt (2.3) miteinander verbunden sind.

11. Bearbeitungszange nach Anspruch 10, **dadurch gekennzeichnet, dass** die eine elektrische Antriebseinheit aufweisende Betätigungseinrichtung (7) im Bereich des Zangenjochabschnittes (2.3) seitlich am Zangenkörper (2) und die Kraftübersetzungsmechanik (8) im Bereich des ersten Zangenarmes (2.1) angeordnet sind.

12. Bearbeitungszange nach einem der vorhergehenden Ansprüche, **dadurch gekennzeichnet, dass** das erste Werkzeugteil (3.1) als Werkzeugstössel oder Plunger ausgebildet ist.

13. Bearbeitungszange nach einem der vorhergehenden Ansprüche, **dadurch gekennzeichnet, dass** die Zustelleinrichtung (4) zur Erzeugung einer Zustellbewegung des ersten Werkzeugteils (3.1) mit großen Zustellhub, jedoch lediglich geringer Zustellkraft ausgebildet ist.

## Claims

1. Processing pincers for machining and/or processing of workpieces with high processing forces (F) comprising a pincer body (2) with a first and second pincer arm (2.1, 2.2) and at least a tool (3) having at least two tool parts (3.1, 3.2) which are movable relative to each other and which form a working area (AR), wherein at least the first tool part (3.1) is displaceable along a vertical tool axis (WA) on the first pincer arm (2.1) for closing the working area (AR) and the second tool part (3.2) is arranged on the second pincer arm (2.2) to form a workpiece abutment for at least one workpiece, wherein the first tool part (3.1) can be advanced from an initial position (AU) into a working position (AR) by means of an advancing device (4), wherein, in the working position (AR), the first tool part (3.1) or a functional element held on the first tool part (3.1) abuts against a workpiece supported on the second tool part (3.2) or only has a small distance from the same, wherein an actuating device (5, 7) is provided for applying a high processing force (F) acting along the tool axis (WA) to the first tool part (3.1) after the advancement into the working position (AR) by means of the advancing device (4), wherein the actuating device (5) has an electric drive unit for generating the processing force (F) and directly transferring the generated processing force (F) to the first tool part (3.1), or
the actuating device (7) has an electric drive unit for generating an auxiliary processing force (HF) and a force transmission mechanism (8), drivingly connectable to the first tool part (3.1), which is designed to translate the auxiliary processing force (HF) into the processing force (F) and directly transfer the same to the first tool part (3.1), **characterized in that** the advancing device (4) has another electric drive unit for generating the advancing movement of the first tool part (3.1).

2. Processing pincers according to claim 1, **characterized in that**, in the working position (AR), the actuating device (5) comprising an electric drive unit is connectable to the first tool part (3.1) via a force transmission element (6) displaceable radially to the tool axis (WA), namely by introducing the force transmission element (6) into a free space extending along the tool axis (WA) between the actuating device (5) and the first tool part (3.1).

3. Processing pincers according to claim 1, **characterized in that** the actuating device (5) is movable along the tool axis (WA) along with the first tool part (3.1) and is designed to be fixable in the working position (AR) on the first pincer arm (2.1).

4. Processing pincers according to claim 1, **characterized in that** the auxiliary processing force (HF) generated by the actuating device (7), is oriented radially to the tool axis (WA) or opposite to the processing force (F).

5. Processing pincers according to claim 4, **characterized in that** the force transmission mechanism (8) is designed to translate the auxiliary processing force (HF) provided by the actuating device (7) into a processing force (F) oriented along the tool axis (WA) and acting in the direction of the first tool part (3.1).

6. Processing pincers according to claim 4 or 5, **characterized in that** the force transmission mechanism (8) is designed for increasing the auxiliary processing force (HF) provided by the actuating device (7).

7. Processing pincers according to claim 5 or 6, **characterized in that** the force transmission mechanism (8) has a lever mechanism.

8. Processing pincers according to claim 5 or 6, **characterized in that** the force transmission mechanism (8) has a toggle lever mechanism.

9. Processing pincers according to claim 5 or 6, **characterized in that** the force transmission mechanism (8) has a wedge mechanism.

10. Processing pincers according to one of the preceding claims, **characterized in that** the first and second pincer arms (2.1, 2.2) are connected to each other via a pincer yoke section (2.3).

11. Processing pincers according to claim 10, **characterized in that** the actuating device (7), comprising an electric drive unit, is arranged in the area of the pincer yoke section (2.3) laterally on the pincer body (2) and the force transmission mechanism (8) is arranged in the area of the first pincer arm (2.1).

12. Processing pincers according to any one of the preceding claims, **characterized in that** the first tool part (3.1) is designed as a tool stem or plunger.

13. Processing pincers according to any one of the preceding claims, **characterized in that** the advancing device (4) is designed to generate an advancing movement of the first workpiece part (3.1)with a large advancing stroke but only low advancing force.

## Revendications

1. Pince d'usinage, destinée à usiner et/ou à traiter des pièces avec des forces d'usinage (F) élevées, comprenant un corps de pince (2) pourvu d'un premier et d'un second bras de pince (2.1, 2.2) et d'au moins un outil (3) pourvu d'au moins deux parties d'outil (3.1, 3.2), mobiles l'une par rapport à l'autre, formant une zone de travail (AR), sur laquelle pour fermer la zone de travail (AR), au moins la première partie d'outil (3.1) est déplaçable le long d'un axe d'outil (WA) vertical sur le premier bras de pince (2.1) et pour former un appui de pièce à usiner pour au moins une pièce à usiner, la deuxième partie d'outil (3.2) est placée sur le second bras de pince (2.2), sur laquelle la première partie d'outil (3.1) peut être amenée au moyen d'un système de mise en prise (4) d'une position initiale (AU) dans une position de travail (AR), dans la position de travail (AR), la première partie d'outil (3.1) ou un élément fonctionnel maintenu sur la première partie d'outil (3.1) étant adjacent à une pièce à usiner s'appuyant sur la deuxième partie d'outil (3.2) ou ne présentant qu'un faible écart par rapport à celle-ci, sur laquelle est prévu un système de manoeuvre (5, 7) destiné à soumettre la première partie d'outil (3.1), après la mise en prise au moyen du système de mise en prise (4) dans la position de travail (AR) à une force d'usinage (F) agissant le long de l'axe d'outil (WA), le système de manoeuvre (5) comportant en ensemble d'entraînement électrique, destiné à générer la force d'usinage (F) et à transmettre directement la force d'usinage (F) générée sur la première partie d'outil (3.1) ou
le système de manoeuvre (7) comportant un ensemble d'entraînement électrique, destiné à générer une force d'usinage auxiliaire (HF) et un mécanisme de démultiplication de la force (8) susceptible d'être connecté par entraînement avec la première partie d'outil (3.1), qui est conçu pour démultiplier la force d'usinage auxiliaire (HF) dans la force d'usinage (F) et pour transmettre directement cette dernière sur la première partie d'outil (3.1), **caractérisée en ce que** le système de mise en prise (4) comporte un ensemble d'entraînement électrique additionnel, destiné à générer le déplacement de mise en prise de la première partie d'outil (3.1).

2. Pince d'usinage selon la revendication 1, **caractérisée en ce que** dans la position de travail (AR), le système de manoeuvre (5) comportant un ensemble d'entraînement électrique est susceptible d'être connecté avec la première partie d'outil (3.1) par l'intermédiaire d'un élément de transmission de force (6) susceptible d'être déplacé radial par rapport à l'axe d'outil (WA), à savoir par introduction de l'élément de transmission de force (6) dans un espace libre s'étendant le long de axe d'outil (WA) entre le système de manoeuvre (5) et la première partie d'outil (3.1).

3. Pince d'usinage selon la revendication 1, **caractérisée en ce que** le système de manoeuvre (5) est conçu de manière à être co-déplaçable avec la première partie d'outil (3.1) le long de l'axe d'outil (WA) et à pouvoir être fixé dans la position de travail (AR) sur le premier bras de pince (2.1).

4. Pince d'usinage selon la revendication 1, **caractérisée en ce que** la force d'usinage auxiliaire (HF) générée par le système de manoeuvre (7) est orientée en direction radiale par rapport à l'axe d'outil (WA) ou à l'opposée de la force d'usinage (F).

5. Pince d'usinage selon la revendication 4, **caractérisée en ce que** le mécanisme de démultiplication de la force (8) est conçu pour la démultiplication de la force d'usinage auxiliaire (HF) mise à disposition par le système de manoeuvre (7) dans une force d'usinage (F) orientée le long de l'axe d'outil (WA) et agissant dans la direction de la première partie d'outil (3.1).

6. Pince d'usinage selon la revendication 4 ou 5, **caractérisée en ce que** le mécanisme de démultiplication de la force (8) est conçu pour renforcer la force d'usinage auxiliaire (HF) mise à disposition par le système de manoeuvre (7).

7. Pince d'usinage selon la revendication 5 ou 6, **caractérisée en ce que** le mécanisme de démultiplication de la force (8) comporte un mécanisme à levier.

8. Pince d'usinage selon la revendication 5 ou 6, **caractérisée en ce que** le mécanisme de démultiplication de la force (8) comporte un mécanisme à genouillère.

9. Pince d'usinage selon la revendication 5 ou 6, **caractérisée en ce que** le mécanisme de démultiplication de la force (8) comporte un mécanisme à clavette.

10. Pince d'usinage selon l'une quelconque des revendications précédentes, **caractérisée en ce que** le premier et le second bras de pince (2.1, 2.2) sont assemblés l'un à l'autre par l'intermédiaire d'un tronçon de culasse de pince (2.3).

11. Pince d'usinage selon la revendication 10, **caractérisée en ce que** le système de manoeuvre (7) comportant un ensemble d'entraînement électrique est placé dans la zone du tronçon de culasse de pince (2.3), latéralement sur le corps de pince (2) et le mécanisme de démultiplication de la force (8) est placé dans la zone du premier bras de pince (2.1).

12. Pince d'usinage selon l'une quelconque des revendications précédentes, **caractérisée en ce que** la première partie d'outil (3.1) est conçue sous la forme d'un coulisseau d'outil ou d'un piston.

13. Pince d'usinage selon l'une quelconque des revendications précédentes, **caractérisée en ce que** le système de mise en prise (4) est conçu pour générer un déplacement de mise en prise de la première partie d'outil (3.1) avec une course de mise en prise élevée, toutefois avec une faible force de mise en prise.
